Europäisches Patentamt

European Patent Office

Office européen des brevets

(19)

(11) Publication number: **0 043 408**
**A1**

## (12) EUROPEAN PATENT APPLICATION

(21) Application number: **81102629.3**

(22) Date of filing: **08.04.81**

(51) Int. Cl.³: **A 01 M 7/00, B 05 B 3/02**

(30) Priority: **08.07.80 IT 346680**

(43) Date of publication of application: **13.01.82**
**Bulletin 82/2**

(84) Designated Contracting States: **AT BE CH DE FR GB LI LU NL SE**

(71) Applicant: **W.R. S.r.l., Viale Dante, 94, I-48022 Lugo (Province of Ravenna) (IT)**

(72) Inventor: **Cossu, Salvatore, Via R. Curbastro, 9, I-48022 Lugo (Province of Ravenna) (IT)**

(74) Representative: **Modiano, Guido et al, MODIANO & ASSOCIATI S.A.S. Via Meravigli, 16, I-20123 Milan (IT)**

(54) **Fan for air convection atomizers as employed in plant treatments.**

(57) The invention provides a fan (1) for air convection atomizers as employed in the treatment of plants. The fan has, lying in a perpendicular plane to its rotation axis, and spaced apart at angularly regular intervals, a plurality of blades (5) in the shape of concave troughs relatively to the direction of rotation. The blades (5) are elongated in the plane, from the fan hub (2), and of convex profile, again relatively to the direction of rotation.

Each blade (5) is further provided, in a lengthwise direction thereto, with a small outlet tube (10) for discharging the plant treatment liquid peripherally to the fan (1), the end of the tube (10) facing the fan hub (2) being open to an inner chamber (12) arranged axially to the fan hub (2) and communicating axially with a liquid delivery conduit (15).

This invention relates to a fan for air convection atomizers as employed in plant treatments.

Well known is in agriculture the use of atomizers for liquids intended for treating cultivations therewith. In conventional air convection atomizers, the plant treatment liquid issues under a relatively high pressure from specially provided nozzles and is swept by a high speed air stream created by a fan; the liquid is thus atomized and sprayed. Accordingly, the operational capabilities of the atomizers will closely depend both on the nozzles themselves and the fan generating said air stream, which fans are mostly of the axial flow type and fail to fully meet the requirements of the atomizer users. On the other hand, in order to achieve a fine atomization of the liquid, high power pumps are required which can deliver the liquid at a high pressure. Such pumps, by themselves quite expensive and power-consuming, also require continued maintenance and are liable to failure, which may result in a prolonged inutilization of an atomizer, thus making it impossible to carry out the intended plant treatment at the proper time. Furthermore, such atomizers have often problems of weight, and above all size, which originate from the presence of baffle plates, such as are required to redirect the airflow issueing from the fan, as well as problems of ejecting nozzle cost, servicing, and adjusting, the nozzles being of complex construction, inasmuch as a satisfactory performance of the nozzles involves the provision of such ancillary equipment as distributors and diffusers.

This invention sets out to provide a fan for air convection atomizers, which can obviate the drawbacks outlined hereinabove, and in particular can do away with a liquid supply pump, while still ensuring an effective atomization of the liquid.

Within the above general aim, it can be arranged that the air convection atomizer fan according to the invention is of simple design, of small size, versatile and reliable in operation, and of comparatively economical cost.

According to one aspect of the present invention, there is provided a fan for air convection atomizers as employed in plant treatment, characterized in that it comprises, arranged in a perpendicular plane to the direction of rotation of said fan, and at angularly regular intervals apart, a plurality of blades shaped as a concave trough relatively to said direction of rotation and being elongated in said plane from the fan hub out, and having a convex profile relatively to said direction of rotation, each said fan blade being provided, in a lengthwise direction, with a small outlet tube for discharging a plant treatment liquid peripherally to said fan, the end of said small tube facing said hub being open to an inner chamber extending axially to said hub and axially communicating with a liquid delivery

0043408

conduit.

The features of this invention will be more clearly apparent from a detailed description of preferred embodiments of this fan for air convection atomizers, with reference to the accompanying illustrative drawings, where:

Figures 1 and 2 are perspective views of respective forms of the fan blades;

Figures 1a, 1b, and 1e are cross-sectional views of the blade of Figure 1, the plane whereat such cross-sections were taken being respectively located close to the fan hub, nearly at the center of the blade, and close to the periphery of the fan;

Figures 2a, 2b, and 2c are corresponding cross-sections of the blade of Figure 2;

Figure 3 shows a partly sectional and fragmentary front view of a fan equipped with the blades of Figure 1;

Figure 4 is a sectional view taken along the line IV-IV of Figure 3;

Figure 5 is a partial cross-sectional view similar to that of Figure 4 of a fan mounting blades like the one shown in Figure 2;

Figure 6 is a partial front view of a fan equipped with a liquid recovering casing or hood which is modified with respect to the preceding figures; and

Figure 7 shows a partial vertical axial sectional view of the fan of Figure 6.

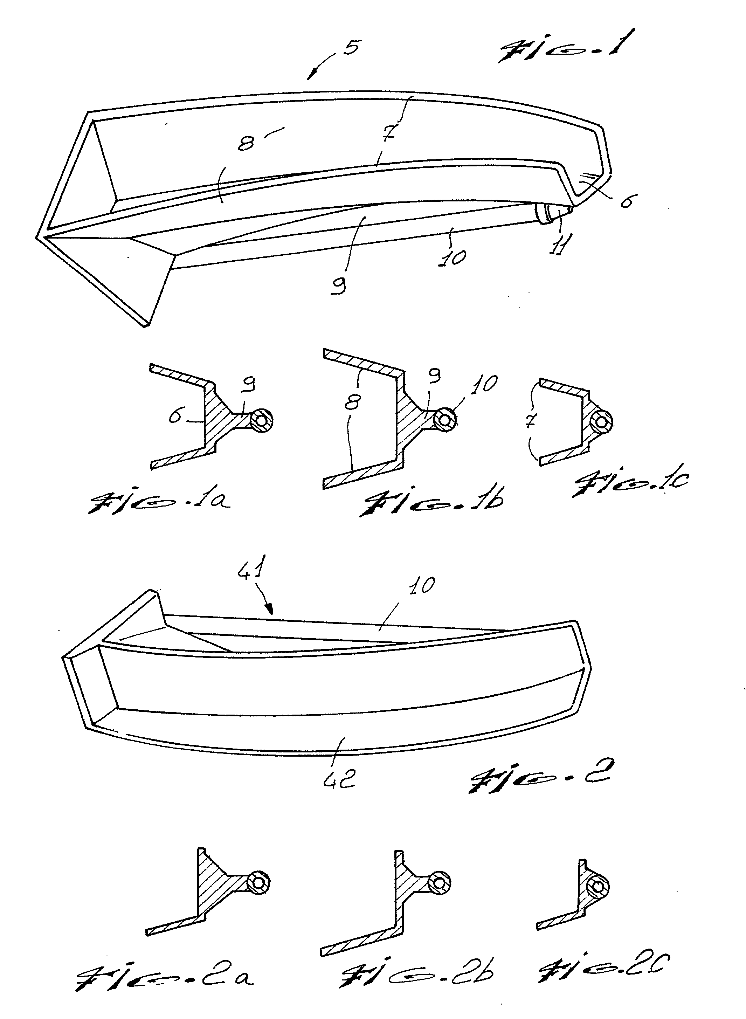

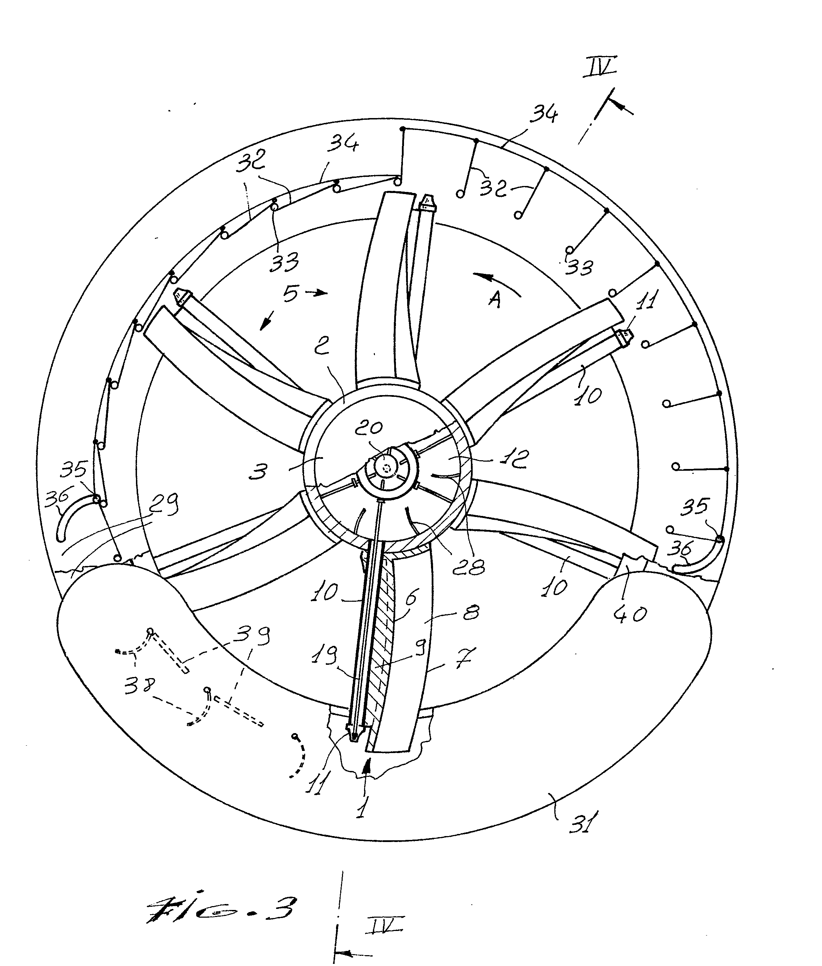

With initial reference to Figures 1, 3 and 4, there is indicated at 1 a fan for an air convection atomizer, not shown in the drawings. The fan 1 has
a hub 2 which is mounted, through a clutch 3, on
one end of a horizontal shaft 4 journaled at 4a;
the shaft 4 is arranged to lay longitudinally to
the atomizer and intended for high speed rotation,
the rotary motion being derived from a suitable
step-up gear, not shown.

Externally rigid with the hub 2 and preferably
removably attached thereto, e.g. through screw
fasteners, are the blades 5 of the fan 1, which
blades are arranged at regular intervals around
the hub and extend in a common vertical plane
perpendicular to the axis of the shaft 4. Each
blade 5 is shaped like a trough, which is elongated
in said vertical plane from the hub 2 out, and is
concave relatively to the direction A of rotation
of the fan.

In the lengthwise direction, the profile of
each blade 5, both at the bottom 6 of the trough and
tops 7 of the two sides 8 thereof, is convex, again
as viewed in the direction A. Moreover, said two
tops 7 and the bottom 6 of each blade 5 are
essentially in common with the lateral surfaces of
two respective right cylinders sharing the same
axis parallel to the axis of the shaft 4; actually,
the height of the blade trough increases gradually
from the hub 2 and from the periphery of the fan,
to reach its maximum in the area of the blade center.
The inside cross-section of the trough of each
blade 5 has the shape of an isosceles trapezoid having its minor base at the bottom 6 of the trough; the bases of said trapezoid and the width of the blade cross-section increase progressively from the hub 2 and from the periphery of the fan, to reach their maximum at the middle of the blade, the cross-sections of a blade being approximately the same both at the hub and fan periphery. The outside cross-sectional configuration of a trough is approximately the same as the inside one, thereby a blade is flared on both sides, and internally as well as externally.

The back of each blade 5 is provided, at the vertical midplane of the blade trough, with a stiffening rib 9, the height whereof decreases progressively from the hub 2 out. Again at said trough vertical midplane, each blade carries a small tube 10, which is straight, radially arranged to the fan, and extended substantially through the whole blade length. The tube 10 is advantageously formed from a metal material, such as stainless steel, and is an insert member of the rib 9 of the blade, which is preferably molded from a plastic material, known in the trade as Nylon, with glass fiber reinforcement. At its end toward the periphery of the fan 1, the tube 10 carries a removable liquid outlet nozzle 11, of simple design, for the plant treatment liquid.

At its other end, the tube 10 is in communication with a chamber 12 arranged internally to the hub 2, through a respective hole. The hub 2

0043408

comprises, in actual practice, a cylindrical tubular body which is subdivided internally by a diaphragm 13 extending perpendicular to the fan axis and defining on one side the chamber 12 and on the other side a housing for the friction clutch 3. The chamber 12 is closed on the front by a wall 14 wherethrough a treatment liquid delivery tube or conduit 15 is inserted axially in sealed relationship. The hub 2 is rotatable relative to said conduit 15, with the interposition of rolling bearings 16 accommodated inside a sleeve 17 formed in the wall 14 on the opposite side to the chamber 12 and coaxial with the hub. The conduit 15, outside of the hub 2, is bent downwardly to an elbow-like shape and carries a treatment liquid filter 18 mounted thereon.

In an illustrative embodiment, the tubes 10 have mounted axially therein respective shutters 19, each shutter comprising a pin or needle member which, when displaced axially, closes the outlet port of the nozzle 11. The shutters 19 are actuated through a cam 20 arranged in the same vertical plane as the blades 5 and rigid with a small shaft 21 extending coaxial with the conduit 15. The shaft 21 can be operated by means of a knob 22, external to the conduit, and can be locked by means of a screw 23 acting on the shaft radially thereto. The cam 20 is accommodated inside an internal bushing 24 to the chamber 12 in the hub 2 and coaxial therewith, it being attached to the diaphragm 13 of the hub. The shutters 19 are arranged radially to the bushing 24 and passed through holes formed therein in free sliding relationship; each shutter 19 is formed with shoulders 25 and 26, one inside and the other outside the bushing. On the shoulder 25 there will act the cam 20; between that shoulder and the inner wall of the bushing 24, there is interposed a coil spring 27 mounted on the shutter 19 and compressively holding the shutter in its position of opening the nozzle 11: in that position, the shoulder 26 abuts against the outer wall of the bushing 24, and the shoulder 25 does not contact the cam 20. Preferably, the cam 20 is contoured to simultaneously operate the shutters 19 arranged along a substantially 120° arc, it functioning as a throttling device for the delivered treatment liquid. Of course, provisions are made to deactuate that throttling device by sliding the shaft 21 axially such that none of the shoulders 25 of the shutters 19 can engage the cam 20.

Internally to the chamber 12, there are made rigid with the hub 2 blades 28 which are arranged at regular angular intervals and have a concave profile relatively to the direction A of rotation of the fan. The tubes 10 open into the chamber 12 at an approximately middle location of a pair of adjacent blades 28.

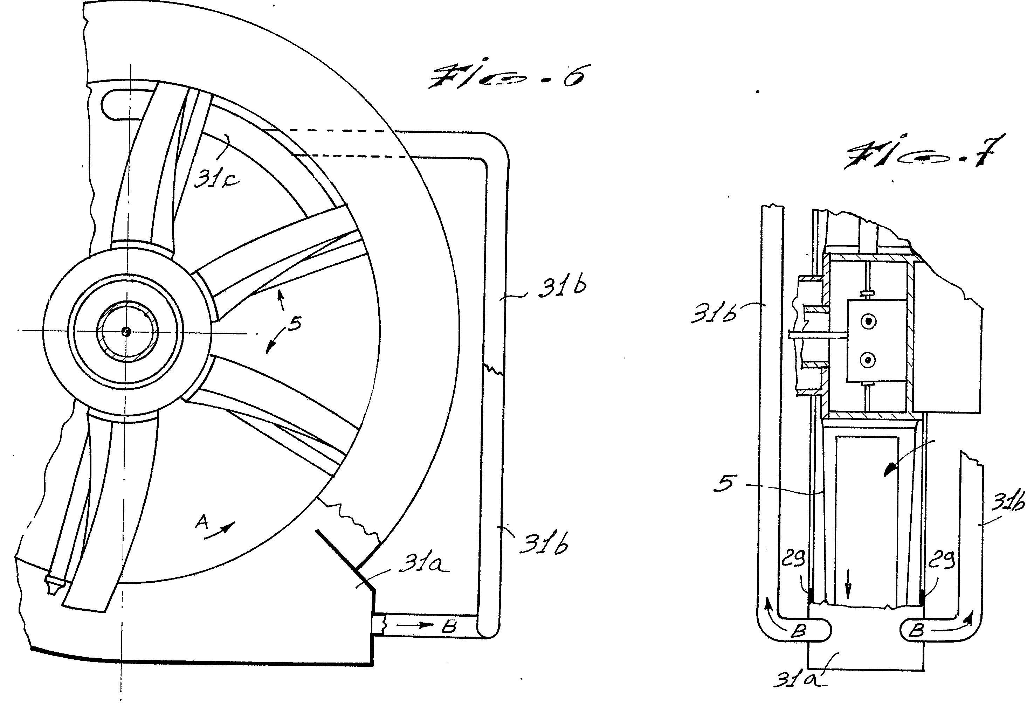

The fan 1 is located inside a frame which is affixed to the atomizer and comprises a pair of small walls 29 extending to define an annulus having inside and outside radii which are respectively slightly smaller and larger than the radius of the blades 5; the small walls are arranged in vertical planes perpendicularly to the axis of the shaft 4, one on one side and the other on the other side of the blades. The small walls 29 have each a grid 30 attached thereto shrouding the front of the fan 1, which grid is not shown in Figure 3. At their lower perimeter and substantially over 120°, the small walls 29 are located inside a hood 31 which serves for recovering the treatment liquid and which is elongated to concentrically extend along the same arc. Along 240° of the fan periphery (that is, excepting the enclosed portion of the recovery hood), there is defined, accordingly, the liquid and air outlet section. Along said section, there are arranged at regular angular intervals foil elements 32, which are journalled about respective axes 33, which are secured between the small walls 29 and parallel to the axis of the shaft 4. Each element 32 has in practice a width dimension which is equal to the distance between the small walls 29 and a height dimension which is equal to the distance separating two contiguous axes 33; the elements 32, therefore, by rotation about their axes, can come to rest upon one another and close said outlet section of the fan. The vertical plane containing the axis of the shaft 4 separates the elements 32 into two groups including the same number of elements; at

their tops, the elements 32 of each said group are
interconnected by a respective pair of wire arches
34 which are hinged to said elements. All the
elements 32 in one group are arranged in a condition
of closure of one of the halves of said fan outlet
section (in Figure 3, there is shown closed the
left-hand half), or in an open condition (on the
right in Figure 3), of conveyance of the air and
liquid flow wherein the elements 32 are substantially
radial to the fan. From the outside, either condition
is imparted to the elements 32 of the two groups
by operating a pin 35, which is preferably carried
by the lower end of the respective pair of arches
34 and protrudes outwardly through a related arcuate
slot 36 cut through one of the small walls 29; of
preference, each pin 35 is provided with a knob which
can be locked to the small wall at either end of
the slot, thereby the elements 32 are held stably
in their acquired condition. It should be noted that,
with the elements 32 in their open condition, the
pair of arches 34 serve as a peripheral protection
grid for the fan 1. The recovery hood 31 has a dual
lobe cross-sectional configuration, comprising two
approximatively    semicircular segments, which are
symmetrical with respect to the vertical middle
plane of the blades 5 and, at that same plane, meet
each other to form a cusp 37, underlying the small
walls 29 and facing the blades. At the entry area of
the fan 1 into the recovery hood, between the small
walls 29, there are affixed and angularly arranged at regular intervals and alternate with one another, further blades 38 and webs 39 which deflect the air and liquid flow created by the fan; the blades 38 have a convex profile relatively to the direction of rotation A  of the fan, the webs being near a condition of tangency to the fan. Again for the purpose of directing the airflow into the recovery hood, the small walls 29 have, on their outward faces and at their inward edges, a boss 40 with a convex arcuate profile which extends annularly along the entire edge.

In Figures 6 and 7, there is illustrated a fan equipped with a treatment liquid recovery device of simpler design, although equally functional. This recovery device, as indicated at 31a, comprises a hood which is also arranged at the lower arc of the fan and has flat side walls constituting substantially an extension of the small walls 29. The recovery device 31a has, therefore, a rectangular cross-section and extends longitudinally along a horizontal direction tangent to the fan. Forward of the hood, in the direction of rotation of the fan, there are provided a pair of symmetrically bilateral tubes 31b, which are initially divergent on a horizontal plane and in a forward direction to the fan; the tubes 31b are then bent vertically upwards, whence they are turned in a rearward direction to converge toward the fan, where they terminate in respective outlets 31c substantially at the location of the vertical planes of the small walls 29. Such outlets have an arcuate shape and are arranged at an
upper peripheral arc of the fan.

The invention operates as follows.

The fan draws air from the front, on both sides,
and forces it by centrifugal force toward its
periphery; the airflow is effectively guided, for as
radial as possible an exit, by the channel blades 5.
The exiting air meets the treatment liquid ejected
from the nozzles 11 of the small tubes 10 and
atomizes it, sweeping the plants with a jet which,
with all the elements 32 in the open condition and
the cam 20 deactivated, assumes a typical fan-like
or peacock tail-like shape. The liquid to be sprayed
reaches the chamber 12 in the rotating hub 2 through
the stationary conduit 15 which is connected to the
atomizer reservoir. The chamber 12, owing also to
the presence of the blades 28, applies to the liquid
a centrifugal pump action effective to impart thereto
a pushing force in the direction of the radial outlets
toward the small tubes 10. The liquid is subjected to
a further centrifugal acceleration along the small
tubes themselves, so as to reach the outlet nozzles
11 with considerable momentum by the sole action of
said blade chamber and small tubes. Thus, the fan
enables the conventional liquid pump to be eliminated,
with obvious attendant advantages.

By changing the rpm's of the atomizer motor, and
accordingly the rotational speed of the fan, it is
possible to both adjust the liquid flow rate and the
jet reach, as well as the atomization of the liquid.

For the purpose of adjusting the flow rate of the liquid, it is also contemplated that a specially provided valve, mounted on the delivery conduit upstream of the filter 18, be operated. The fan efficiency is also increased by the provision of the recovery device 31, which circulates the liquid which leaves the small tubes 10 in a downward direction, without the liquid gradually building up in the recovery hood. In fact, the airflow which leaves radially downwards the blades 5 while entraining the atomized liquid, is deflected by the webs 39 tangentially to the fan and recovery hood and is directed by the blades 38 inwardly toward the bottom of the recovery hood in the opposite direction to the direction of rotation A of the fan. At the bottom of the recovery hood and cusp 37, the flow, as redirected by the blades, is divided and conveyed to the two lobes of the recovery hood, which it spans upwardly as indicated by the arrows B, to then re-enter the fan frontally from the passages defined between the upper edges of the recovery hood and the bosses 40. The thus recovered flow is then ejected from the fan outwards, partly upstream and primarily downstream of the recovery hood.

In the instance of the recovery device or unit 31a shown in Figures 6 and 7, which has no webs 39 and blades 38 on its inside, the airflow which leaves radially downwards the blades 5 while entraining the atomized liquid, is deflected tangentially to the fan, in the direction of rotation of the fan, and

0043408

enters the tubes 31b to flow in an upward direction through the tubes. Then the flow re-enters the fan frontally through the two outlets 31c and is recovered. Instead of admitting said flow directly into the fan, the tubes 31b may convey it into the reservoir, whence the treatment liquid is led to the conduit 15; in this case, the tubes 31b would converge to the narrow section of a Venturi provided downstream of a pump which will only recirculate and mix the treatment liquid contained in that same vessel. The jet of atomized liquid can leave the fan over an angle of 240°, or angles of 120° on either side of a vertical plane extending through the axis of the shaft 4. The 120° jet outflow is prevented when either set of foil elements 32 is brought to a closed condition; also, in the embodiment wherein the small tubes 10 are equipped with shutters 19, the outflow of the liquid through the nozzles 11, which are located at either 120° arc, is stopped by axially and pivotally operating the shaft 21 until the cam 20 moves into a position where it will act on the shutters of the nozzles. Of course, to restrict the jet to just 120°, it will be expedient to both close the elements 32 and nozzles 11.

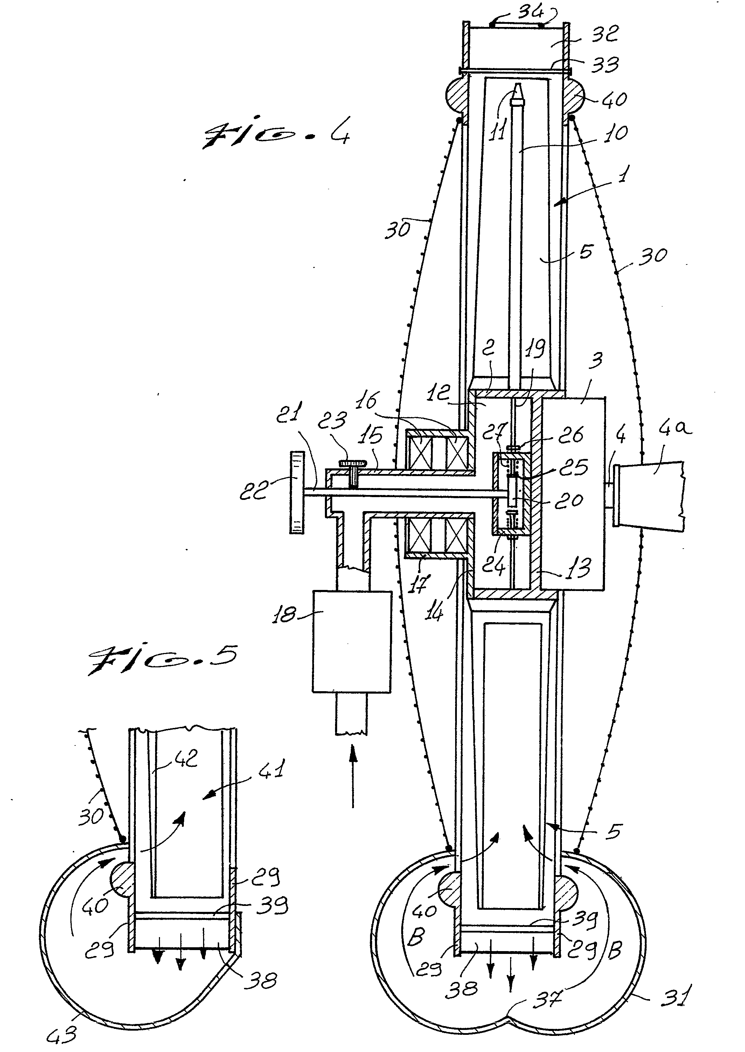

The fan, as shown in Figures 1,3 and 4, draws air on both its fronts, and is particularly suitable for use on trailer-mounted or self-propelled atomizers. Where the fan is installed on an atomizer carried by a tractor, it is contemplated that the suction only occurs on one front (Figures 2 and 5).

0043408

In this case, the blades 41 would have in practice, as compared to blades 5, a single side member 42 facing the single suction grid 30. The recovery device 43, moreover, would include a single lobe for redirecting the air-liquid flow to the single suction front.

The materials employed, as well as the dimensions, in practicing the invention, may be any ones to suit individual requirements.

C L A I M S

1. A fan for air-convection atomizers as employed in plant treatment, characterized in that it comprises, arranged in a perpendicular plane to the direction of rotation of said fan (1), and at angularly regular intervals apart, a plurality of blades (5) shaped as a concave trough relatively to said direction of rotation and being elongated in said plane from the fan hub (2) out, and having a convex profile relatively to said direction of rotation, each said fan blade (5) being provided, in a lengthwise direction, with a small outlet tube (10) for discharging a plant treatment liquid peripherally to said fan (1), the end of said small tube facing said hub (2) being open to an inner chamber (12) extending axially to said hub (2) and axially communicating with a liquid delivery conduit (15).

2. A fan according to Claim 1, characterized in that said small tubes (10) on said blades (5) have each one shutter (19) mounted therein, said shutters (19) being movable axially to close the outlet port for the treatment liquid and driven through camming means (20), said camming means (20) being carried inside said chamber (12) in said hub (2), said fan being rotatable relatively to said camming means.

3. A fan according to Claim 1, characterized in that said chamber (12) in said hub (2) has, in a perpendicular plane to said rotation axis, a plurality of small blades (28) arranged at angularly regular intervals apart and being effective to centrifugally convey said liquid to said small tubes (10).

4. A fan according to Claims 1 and 3, characterized in that said small blades (28) have a concave profile relatively to the direction of rotation of said fan (1), at a substantially middle location between two adjacent small blades (28) there opening a related liquid outlet small tube (10).

5. A fan according to Claim 1, characterized in that said small tubes (10) are of substantially equal length to the length of said blades (5) and constitute an insert on the back of said blades (5), said insert being incorporated to said blades (5) during the molding thereof.

6. A fan according to Claim 1, characterized in that each said blade (5) has a flared cross-section in the shape of an isosceles trapezoid with the minor base at the bottom of said trough or channel.

7. A fan according to Claim 1, characterized in that it rotates downwards inside a hood portion (31) functioning as a liquid recovery device, said hood (31) carrying, at a forward end in the fan direction of rotation, at least one tube facing upwards and opening frontally to the fan (1) with a relative mouth of arcuate shape and arranged at a peripheral upper location of said fan (1).

8. A fan according to Claims 1 and 7, characterized in that between a pair of annulus forming walls (29) in said hood (31), and along the outward arc thereof with respect to said hood (31), there are mounted for oscillation foil elements(32) adapted to assume

0043408

a condition of support one against the other and of closure of the fan periphery and to assume a condition of radial conveyance to the fan (1), said foil elements (32) being divided in two groups or sets which simultaneously with and independently of each other can be operated to assume either of said conditions.

Fig.1

Fig.1a

Fig.1b

Fig.1c

Fig.2

Fig.2a

Fig.2b

Fig.2c

Fig.3

0043408

FIG.4

FIG.5

FIG.6

31c

31b

5

A

31a

31b

FIG.7

31b

5

29   29

B   B

31a

0043408

## DOCUMENTS CONSIDERED TO BE RELEVANT

| Category | Citation of document with indication, where appropriate, of relevant passages | Relevant to claim |
|---|---|---|
| | US – A – 2 939 636 (A.R. MULLIN) | 1,7 |
| | * column 2, line 40 – column 4, line 21; figures 1-6 * | |
| | -- | |
| | FR – A – 2 329 198 (P.P. CALVET) | 1,3,4, 7 |
| | * page 2, line 10 – page 4, line 18; figures 1-2 * | |
| | -- | |
| | US – A – 2 750 708 (L. HANDFIELD) | 1,7 |
| | * the whole document * | |
| | -- | |
| A | US – A – 3 063 644 (E.J. BALS) | |
| A | DE – A – 1 802 735 (S.A. MENCACCI) | |
| A | CH – A – 253 702 (C. ANDERMATT) | |
| | ----- | |

**CLASSIFICATION OF THE APPLICATION (Int. Cl. )**

A 01 M 7/00
B 05 B 3/02

**TECHNICAL FIELDS SEARCHED (Int. Cl.³)**

A 01 M
B 05 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 28-08-1981 | NEHRDICH |

EPO Form 1503.1   06.78